# EUROPEAN PATENT SPECIFICATION

(11) **EP 1 039 797 B1**
(45) Date of publication and mention of the grant of the patent: **23.04.2003**
(21) Application number: 98964642.7
(22) Date of filing: 18.12.1998
(51) Int. Cl.: A01J 5/017, G07C 3/00

(54) **AN ANIMAL RELATED APPARATUS**
VORRICHTUNG FÜR EIN TIER
DISPOSITIF EN RAPPORT AVEC UN ANIMAL

(30) Priority: 19.12.1997 SE 9704780
(43) Date of publication of application: 04.10.2000
(73) Proprietor: DeLaval Holding AB, 147 21 Tumba (SE)
(72) Inventor: ERIKSSON, Jan, S-147 63 Uttran (SE)
(74) Representative: Hammar, Ernst
(86) International application number: SE9802386
(87) International publication number: WO99031967

(56) References cited:
- EP-A1- 0 442 383
- EP-A2- 0 244 642
- EP-A2- 0 576 086
- WO-A1-96/36212
- CH-A5- 646 254
- SE-B- 353 606
- DERWENT'S ABSTRACT, No. 92-355505/43, week 9243; & SU 1692420 A (AGRIC ELECTRIF RES INST) 23 November 1991.

## Description

### TECHNICAL BACKGROUND

The present invention relates to an animal related apparatus, comprising a robot for performing an animal related operation, said robot being associated with a control means, and at least one animal related device associated with said control means, said robot being provided with a robot arm adapted to move said animal related device towards an animal.

Such an apparatus is known from WO 97/15900. which document describes a milking robot for performing i.a. automatic attachment of teatcups onto the teats of an animal. However, the therein described apparatus needs regular maintenance.

### OBJECT OF THE INVENTION

It is an object of the invention to provide an improved apparatus, which needs less maintenance.

### SUMMARY OF THE INVENTION

This object has been achieved by the apparatus of the initially defined kind, which is characterised in that a registering means is provided for registering a cumulative running value, said control means being adapted to generate a signal when a predetermined threshold value has been reached, and wherein said predetermined threshold value is set for each of said at least one animal related device, said robot and a complete animal related operation.

In particular, said registering means is adapted to register the running value of said at least one animal related device.

Alternatively, or additionally said registering means is adapted to register the running value of a driving means of said robot.

Preferably, said running value is the running time of a complete animal related operation.

Hereby, it is established by the control means when maintenance is needed regarding the whole apparatus.

As said predetermined threshold value is set for each of said at least one animal related device, said robot and said complete animal related operation, it is possible in advance to set a running value outgoing e.g. from wear or health requirements.

Preferably, said animal related device comprises milking equipment having a teatcup provided with a shell and a liner forming an intermediate space, said space being connectible to a source of vacuum via a pulsator for creating a pulsating vacuum, said pulsator being associated with said control means, said control means being adapted to register the cumulative running value of said pulsator.

In particular, said running value is running time of said pulsator. Alternatively, or additionally, said running value is a number of pulsations generated by said pulsator. Hereby, it is possible to establish when the liner needs to be exchanged.

Suitably, said animal related device comprises a teat location device, said running value being running time thereof. Hereby, it is possible to establish when the teat location device needs adjustment.

Preferably, said animal related device comprises a teat cleaning device, said running value being running time thereof. Hereby, it is possible to establish when the teat cleaning device needs thorough cleaning.

Suitably, said apparatus further comprises a gate means for restricting movement of an animal from an animal space, said gate means being opened and closed by means of a driving means, said running value being said running time of said driving means. Hereby, it is possible to establish when the gate means needs to be serviced.

### DRAWING SUMMARY

In the following, the invention will be described in more detail with reference to the accompanying drawings, in which
Figure 1 is a top view of the apparatus according to the invention,
Figure 2 is a schematic view of components of the apparatus shown in figure 1
Figure 3 is a schematic view of further components of the apparatus.

### DETAILED DESCRIPTION

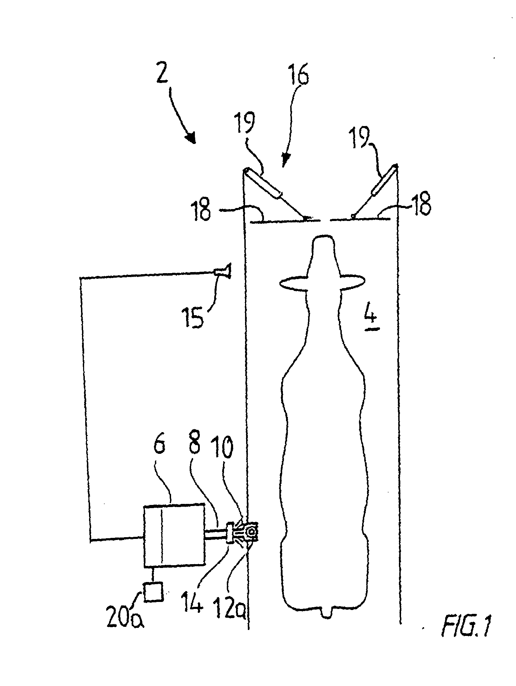

Figure 1 shows an apparatus 1 for performing an animal related operation comprising an animal space 4. A robot 6 is provided with a robot arm 8, which is movable into the animal space 4. The robot arm is, in turn, provided with a gripper 10 for gripping an animal related apparatus, in the figure shown as a teatcup 12a, and an image capturing device 14 for controlling the movement of the robot arm. Alternatively, a laser sensor or an ultrasonic sensor is provided for this purpose.

An sensor 15, e.g. an image capturing device, a laser sensor or an ultrasonic sensor is provided for indicating the presence of an animal in the animal space 4. The sensor is associated with the robot 6.

Furthermore, the animal space 4 is delimited i.a. by means of a gate means 16, comprising a pair of gate members 18, each being provided with a driving means 19 in the form of a pneumatic or hydraulic cylinder.

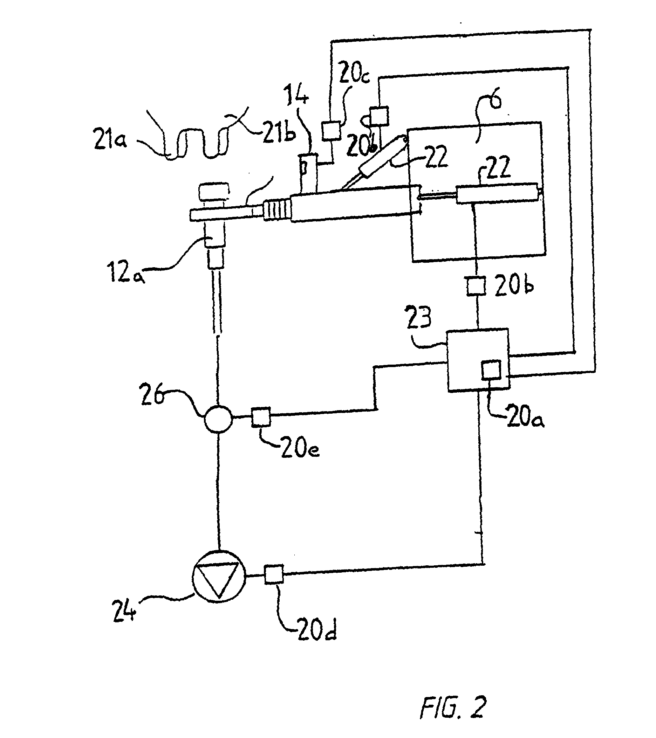

The robot 6 is provided with a control means 23 (see figure 2), which i.a. controls the movement of the robot arm 8, selects the kind of animal related apparatus to be utilised and opens and closes the gates 18. Furthermore, a registering means 20a in the form of a timer is provided for registering the length of a complete animal related operation, such as teat cleaning with subsequent milking.

Figure 2 shows schematically the apparatus of figure 1 in more detail. The robot arm 8 grips the teatcup 12a by means of the gripper 10. The robot arm 8 with image capturing device 14 is moved towards a teat 21a of the udder 21b of an animal to be milked by means of a driving means in the form of pneumatic or hydraulic cylinders 22 associated with said control means 23.

The teatcup 12a is of the generally known kind, comprising a shell and a liner forming an intermediate space, which is connected to a source of vacuum via a pulsator 26. The interior of the liner is connected (not shown) to a milking vacuum created by the vacuum source 24.

Each cylinder 22 is provided with a registering means 20b in the form of a timer, which registers the running time of the cylinders 22. Furthermore, the image capturing device 14 and the vacuum source 24 are provided with such registering means 20c, 20d, that register the running time thereof, respectively.

The pulsator 26 is also provided with a registering means 20e, however either in the form of a timer, which measures the running time of the pulsator, or a pulsation counter, which counts the number of pulsations generated by the pulsator 26.

There may be provided one pulsator 26 for all the teatcups 12a (only one shown in the figure, but there is of course one teatcup provided for each teat to be milked) or one pulsator for each teatcup 12a. In the latter case, there is provided one registering means 20e per pulsator 26

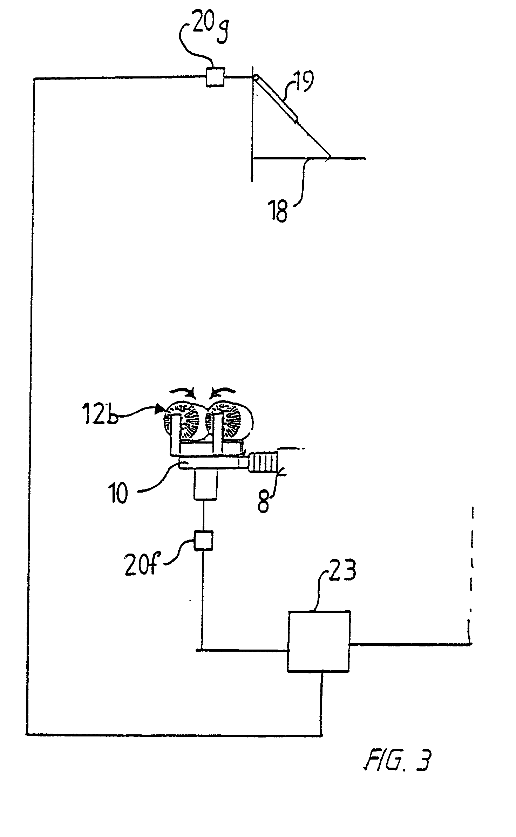

Figure 3 shows schematically the same robot arm as in figure 2, however with another animal related device in the gripper, namely a teat cleaning device 12b, which is provided with a driving means, which performs a counter rotating movement of a pair of circular cylindrical brushes. The driving means is associated with a registering means 20f in the form of a timer, which measures the running time of the driving means.

Furthermore, the driving means 19 of the gate members 18 are connected to a registering means 20g, which measures the running time of the cylinders 19.

### OPERATION

An animal related operation is started when as animal has entered the animal space 4, which is sensed by the animal presence sensor 15, and is an indication for the start of an animal related operation.

The driving means 22 of the robot arm 8 are started and the teat cleaning device 12b is moved towards the teats 21a of the animal, which teats are located by starting the image capturing device 14. The driving means of the teat cleaning device 12b is started and the teat is introduced between the rotating brushes.

The cleaning operation is repeated for all the teats of the udder 21b.

After performed cleaning, the driving means of the teat cleaning device 12b is stopped. The running time thereof is registered in the registering means 20f.

The robot arm 8 returns the teat cleaning device 12b to a rack (not shown) and fetches a teatcup 12a and moves it towards a selected teat 21a, which is located by means of the image capturing device 14.

While attaching the teatcup 12a onto the teat 21a, the interior of the liner is subjected to a milking vacuum, which causes the teatcup to stay attached on the teat. Furthermore, the pulsator 26 is started and the intermediate space is subjected to a pulsating vacuum.

The sequence is repeated until all the teatcups 12a are attached to the rest of the teats, the number depending on the kind of milked animal. The robot arm 8 is returned to a rest position and its driving means 22 is turned off. The running time of the cylinders 22 and the image capturing device 14 is registered.

After finished milking, the pulsator 26 is shut off and the running time and/or the number of pulsations are registered by the timer 20e. A teat retracting means (not shown) e.g. in the form of a pneumatic motor provided with a rope connected to a teatcup, detaches the teatcup and returns it to a storage position. Of course, also the teatcup retracting means may be provided with a registering means.

The gates 18 are now opened, by starting the cylinders 19, for allowing the animal to leave the animal space 4. The gates are closed and the cylinders are turned off. The runing time thereof is registered.

The closing of the gates 19 is also an end signal for the whole animal related operation. The timer 20a thus registers the time lapsed between the initial sensed presence of the animal by the sensor 15 and the closing of the gates 19.

Each time an animal related operation is performed, each registering means 20a. 20b etc. is started and the registered value is added to the already registered from previously performed animal related operations, if any. Accordingly, a memory is provided for accumulating such values.

The control means 23 is preferably set with a maximum running time of each component 19, 22 etc. or a maximum number of pulsations of the pulsator 26, before the control means generates a signal that service has to be performed regarding that component or the whole apparatus. As an example, the control means generates a signal when a teatcup liner must be exchanged, outgoing from a maximum running time of the pulsator or a maximum number of pulsations thereof., the maximum time constituting a threshold value.

It should be noted that the vacuum source 24 may be allowed to run continuously or to be stopped after each finished milking. In each case, the running time thereof is registered.

It should also be noted that the present invention also relates to robot arms with a plurality of teatcups arranged thereon.

Furthermore, a gate means may be provided also as entrance gate into the animal space. Of course, also the driving means of such gates are provided with a registering means.

Also other kinds of teat cleaning devices may be used, such as a teat rinsing cup, in which case the running time of the introduced rinsing fluid is registered.

The invention relates to all kinds of milking animals, such as cows, sheep, goats, horses and buffaloes.

## Claims

1. An animal related apparatus, comprising a robot (6) for performing an animal related operation, said robot being associated with a control means (23), and at least one animal related device (12a, 12b) associated with said control means, said robot being provided with a robot arm (8) adapted to move said animal related device towards an animal, **characterised in that**
a registering means (20a, 20b, ..., 20g) is provided for registering a cumulative running value;
said control means being adapted to generate a signal when a predetermined threshold value has been reached; and wherein
said predetermined threshold value is set for each of said at least one animal related device, said robot and a complete animal related operation.

2. An apparatus according to claim 1, **characterised in that**
said registering means (20a, 20b, ..., 20g) is adapted to register the running value of said at least one animal related device.

3. An apparatus according to claim 1 or 2, **characterised in that**
said registering means (20a, 20b, ..., 20g) is adapted to register the running value of a driving means (22) of said robot (6).

4. An apparatus according to anyone of claims 1 to 3, **characterised in that**
said running value is the running time of said complete animal related operation.

5. An apparatus according to anyone of the preceding claims, **characterised in that**
said animal related device comprises milking equipment having a teat-cup (12a) provided with a shell and a liner forming an intermediate space;
said space being connectable to a source of vacuum (24) via a pulsator (26) for creating a pulsating vacuum,
said pulsator being associated with said control means (23), and
said control means being adapted to register the cumulative running value of said pulsator.

6. An apparatus according to claim 5, **characterised in that**
said running value is running time of said pulsator (26).

7. An apparatus according to claim 5 or 6, **characterised in that**
said running value is a number of pulsations generated by said pulsator (26).

8. An apparatus according to anyone of the preceding claims, **characterised in that**
said animal related device comprises a teat location device (14) and said running value being running time thereof.

9. An apparatus according to anyone of the preceding claims, **characterised in that**
said animal related device comprises a teat cleaning device (12b) and said running value being running time thereof.

10. An apparatus according to anyone of the preceding claims, **characterised in that**
said apparatus further comprises a gate means (18) for restricting movement of an animal from an animal space (4);
said gate means (18) being opened and closed by means of a driving means (19); and
said running value being said running time of said driving means.

## Patentansprüche

1. Auf ein Tier bezogene Einrichtung, mit einem Roboter (6) zur Durchführung einer tierbezogenen Handlung, wobei der Roboter einem Steuermittel (23) zugeordnet ist, und mindestens einer dem Steuermittel zugeordneten, tierbezogenen Vorrichtung (12a, 12b), wobei der Roboter einen Roboterarm (8) aufweist, der die tierbezogene Vorrichtung in Richtung eines Tiers bewegt, **dadurch gekennzeichnet,**
**dass** ein Registriermittel (20a, 20b, ...., 20g) zur kumulativen Erfassung eines laufenden Wertes vorgesehen ist;
**dass** das Steuermittel ein Signal erzeugt wenn ein vorbestimmter Schwellenwert erreicht worden ist; und
**dass** der vorbestimmte Schwellenwert für jede der mindestens einen tierbezogenen Vorrichtung, des Roboters und einer beendeten tierbezogenen Handlung festgesetzt wird.

2. Einrichtung nach Anspruch 1, **dadurch gekennzeichnet, dass** das Registriermittel (20a, 20b, ..., 20g) den laufenden Wert der mindestens einen tierbezogenen Vorrichtung erfasst.

3. Einrichtung nach Anspruch 1 oder 2, **dadurch gekennzeichnet, dass** das Registriermittel (20a, 20b, ..., 20g) den laufenden Wert eines Antriebsmittels (22) des Roboters erfasst.

4. Einrichtung nach einem der Ansprüche 1 bis 3, **dadurch gekennzeichnet, dass** der laufende Wert die Laufzeit der beendeten tierbezogenen Handlung ist.

5. Einrichtung nach einem der vorangehenden Ansprüche, **dadurch gekennzeichnet, dass**
die tierbezogene Vorrichtung Melkgeräte mit einem Zitzenbecher (12a) mit einer Schale und einer Einlage, zwischen denen ein Zwischenraum gebildet ist, umfasst;
wobei der Zwischenraum mittels eines Pulsators (26) mit einer Vakuumquelle (24) zur Erzeugung eines pulsierenden Vakuums verbindbar ist,
wobei der Pulsator den Steuermittel (23) zugeordnet ist, und
wobei das Steuermittel den kumulativen laufenden Wert des Pulsators erfasst.

6. Einrichtung nach Anspruch 5, **dadurch gekennzeichnet, dass** der laufende Wert die Betriebsdauer des Pulsators (26) ist.

7. Einrichtung nach Anspruch 5 oder 6, **dadurch gekennzeichnet, dass** der laufende Wert die Anzahl der von dem Pulsator (26) erzeugten Pulse ist.

8. Einrichtung nach einem der vorangehenden Ansprüche, **dadurch gekennzeichnet, dass** die tierbezogene Vorrichtung eine Zitzenortungsvorrichtung umfasst und dass der laufende Wert deren Betriebsdauer ist.

9. Einrichtung nach einem der vorangehenden Ansprüche, **dadurch gekennzeichnet, dass** die tierbezogene Vorrichtung eine Zitzenreinigungsvorrichtung (12b) umfasst und dass der laufende Wert deren Betriebsdauer ist.

10. Einrichtung nach einem der voranstehenden Ansprüche, **dadurch gekennzeichnet, dass**
die Einrichtung weiterhin ein Tormittel (18) zur Beschränkung der Bewegung eines Tiers von einem Tierplatz (4) aufweist;
wobei das Tormittel (18) mittels eines Antriebsmittels (19) geöffnet und geschlossen wird; und
wobei der laufende Wert die Betriebsdauer des Antriebsmittels ist.

## Revendications

1. Dispositif pour animaux, comprenant un robot (6) servant à réaliser une opération se rapportant à un animal, ledit robot étant associé à un moyen de commande (23), et au moins un appareil (12a, 12b) se rapportant à un animal, associé audit moyen de commande, ledit robot étant muni d'un bras de robot (8) adapté pour rapprocher d'un animal ledit appareil se rapportant à un animal, **caractérisé en ce que**
un moyen enregistreur (20a, 20b, ..., 20g) est prévu pour enregistrer une valeur de marche cumulative ;
ledit moyen de commande étant adapté pour produire un signal quand une valeur de seuil prédéfinie a été atteinte ; et dans lequel
ladite valeur de seuil prédéfinie est réglée pour chacun desdits au moins un appareil se rapportant à un animal, pour ledit robot et pour une complète opération se rapportant à un animal.

2. Dispositif selon la revendication 1, **caractérisé en ce que** ledit moyen enregistreur (20a, 20b, ... , 20g) est adapté pour enregistrer la valeur de marche dudit au moins un appareil se rapportant à un animal.

3. Dispositif selon la revendication 1 ou 2, **caractérisé en ce que** ledit moyen enregistreur (20a, 20b, ... , 20g) est adapté pour enregistrer la valeur de marche d'un moyen d'entraînement (22) dudit robot (6).

4. Dispositif selon l'une quelconque des revendications 1 à 3, **caractérisé en ce que** ladite valeur de marche est le temps de marche de ladite complète opération se rapportant à un animal.

5. Dispositif selon l'une quelconque des revendications précédentes, **caractérisé en ce que** ledit appareil se rapportant à un animal comprend un équipement de traite comportant un trayeur (12a) muni d'un gobelet et d'un manchon formant un espace intermédiaire ;
ledit espace pouvant être connecté à une source de vide (24) via un pulsateur (26) pour créer un vide pulsé,
ledit pulsateur étant associé audit moyen de commande (23), et
ledit moyen de commande étant adapté pour enregistrer la valeur de marche cumulative dudit pulsateur.

6. Dispositif selon la revendication 5, **caractérisé en ce que** ladite valeur de marche est le temps de marche dudit pulsateur (26).

7. Dispositif selon la revendication 5 ou 6, **caractérisé en ce que** ladite valeur de marche est un nombre de pulsations produites par ledit pulsateur (26).

8. Dispositif selon l'une quelconque des revendications précédentes, **caractérisé en ce que** ledit appareil se rapportant à un animal comprend un appareil de localisation (14) de trayon et ladite valeur de marche est le temps de marche de celui-ci.

9. Dispositif selon l'une quelconque des revendications précédentes, **caractérisé en ce que** ledit appareil se rapportant à un animal comprend un appareil de nettoyage (12b) de trayon et ladite valeur de marche est le temps de marche de celui-ci.

10. Dispositif selon l'une quelconque des revendications précédentes, **caractérisé en ce que** ledit appareil comprend en outre un moyen formant barrière (18) pour limiter le mouvement d'un animal par rapport à un espace (4) pour animal ;
ledit moyen formant barrière (18) étant ouvert et fermé au moyen d'un moyen d'entraînement (19) ; et
ladite valeur de marche est le temps de marche dudit moyen d'entraînement.
